Europäisches Patentamt

European Patent Office

Office européen des brevets

(11) Veröffentlichungsnummer: **0 446 427 A1**

(12) **EUROPÄISCHE PATENTANMELDUNG**

(21) Anmeldenummer: 90122254.7

(22) Anmeldetag: 22.11.90

(51) Int. Cl.5: **B60G 15/06**, B60G 3/20, B60G 11/14

(30) Priorität: 12.03.90 DE 4007809

(43) Veröffentlichungstag der Anmeldung:
18.09.91 Patentblatt 91/38

(84) Benannte Vertragsstaaten:
DE FR GB IT NL SE

(71) Anmelder: **Dr.Ing.h.c. F. Porsche Aktiengesellschaft**
**Porschestrasse 42**
**W-7000 Stuttgart 40(DE)**

(72) Erfinder: **Moll, Patrick**
**Elektrastrasse 32**
**W-8000 München 81(DE)**

(54) **Radaufhängung.**

(57) Es wird eine Radaufhängung für die Räder von Kraftfahrzeugen mit am Radträger angelenkten Radführungsgliedern beschrieben, die am Fahrzeugaufbau schwenkbeweglich gelagert sind, wobei das Rad über Dämpferelemente und/oder Schraubenfedern zum Fahrzeugaufbau hin abgestützt ist. Zwischen einem Radführungsteil (2, 3) und einem Träger (6) des Fahrzeugaufbaus ist ein bei Rad-Einfederungsbewegungen auf Zug belastetes Dämpferelement (8) und/oder eine Schraubenfeder (15) angeordnet. Das Dämpferelement ist so angeordnet, daß die bei den Einfederungsbewegungen belastete eine Kolbenfläche (17) des Kolben des Dämpferelements (8) kleiner ist als die bei Ausfederungsbewegungen belastete weitere Kolbenfläche (18). Hierdurch wird ein Dämpferelement geschaffen, das hauptsächlich bei Einfederungsbewegungen auf Zug belastet wird.

FIG.1

Die Erfindung bezieht sich auf eine Radaufhängung nach dem Oberbegriff des Anspruchs 1.

Bekannte Radaufhängungen weisen zwischen einem Radträger bzw. einem Lenker eines Radführungsgliedes und einem aufbauseitigen Abstützort ein Dämpferbein in Kombination mit einer Schraubenfeder auf. Das Dämpferbein sowie die Schraubenfeder werden bei Einfederungsvorgängen des Rades so angeordnet, daß sie auf Druck beansprucht werden. Diese Druckbeanspruchung der Federelemente bedingt einen speziellen aufbauseitigen Abstützdom im Fahrzeugaufbau für den Zylinder des Dämpferbeines. Auch ist die Kolbenstange aufgrund der relativ großer Druckbeanspruchung bei den Einfederungsvorgängen gegen ein Ausknicken mit einem relativ großen Druchmesser dimensioniert. Zur Erzielung hoher Dämpfungskräfte steht nur die kleinere Kolbenfläche, nämlich die Ringfläche des Kolbens zur Verfügung. Durch die wesentliche Druckbeaufschlagung der Schraubenfeder bei Einfederungsvorgängen ist diese gegen ein Ausknicken mit einem relativ großen Durchmesser ausgeführt, was einen entsprechenden Platzbedarf bedingt.

Aufgabe der Erfindung ist es eine Radaufhängung zu schaffen, die kleinbauende und bei Einfederungsbewegungen optimal belastete Federelemente zwischen einem Radführungsteil und einem aufbauseitigen Abstützort aufweist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile von bei Einfederungsvorgängen auf Zug belasteten Federelementen wie Dämpferbein und Schraubenfeder, bestehen wie aufgeführt in folgendem:

- Es wird eine direkte Krafteinleitung in einem aufbauseitigen Querträger erzielt, wobei ein Dämpferdom entfällt, und hierdurch eine Gewichtseinsparung erzielt wird und weniger Kosten anfallen.
- Die hauptsächlich auf Zug beanspruchte Schraubenfeder kann mit einem geringeren Durchmesser als bei einer hauptsächlich auf Druck beanspruchten Schraubenfeder ausgeführt werden.
- Die Kolbenstange des Dämpferbeines kann durch die Zugbeanspruchung beim Einfederungsvorgängen nicht ausknicken.
- Der Dämpfer kann eine geringere Länge als herkömmliche auf Druck beanspruchte Dämpfer aufweisen, da ein geringerer Abstand zwischen dem Kolben und seinem Führungslager zugelassen werden kann.
- Die Zug- und Druckstufe des Stoßdämpfers ist umgekehrt belastet, wie bei dem bekannten Dämpferbein. Hierdurch wird beim Ausfedern des Rades (hohe Dämpfungskräfte) auch die größere Kolbenfläche des Dämpfers beaufschlagt. Somit kann das auf Zug beanspruchte Dämpferbein einen geringeren Durchmesser als das bekannte Dämpferbein bei gleicher Leistung aufweisen.
- Durch die Befestigung des Zylinders des Dämpferbeines am Fahrzeugaufbau werden auch verminderte ungefederte Massen erzielt.

Ausführungsbeispiele der Erfindung sind in der Zeichnung dargestellt und werden im folgenden näher beschrieben.

Es zeigen

Fig.1 eine schematische Vorderansicht einer Radaufhängung mit einem am oberen Querlenker abgestützten und auf Zug beanspruchten Dämpferbein mit Schraubenfeder,

Fig.2 eine weitere Ausführung mit einer Abstützung des auf Zug beanspruchten Dämpferbeines und Federelements am Radträger,

Fig.3 eine Draufsicht auf eine Radaufhängung mit beiderseitig einer Raddrehachse angeordnetem Dämpferbein und Schraubenfeder,

Fig.4 eine Draufsicht auf eine Radaufhängung, bestehend aus einem aufgelösten Dreieckslenker und mit an diesem abgestützten Dämpferbein,

Fig.5 eine auf Zug beanspruchbare Luftfeder in Einbaulage und

Fig.6 ein auf Zug beanspruchtes Dämpferbein in Einbaulage.

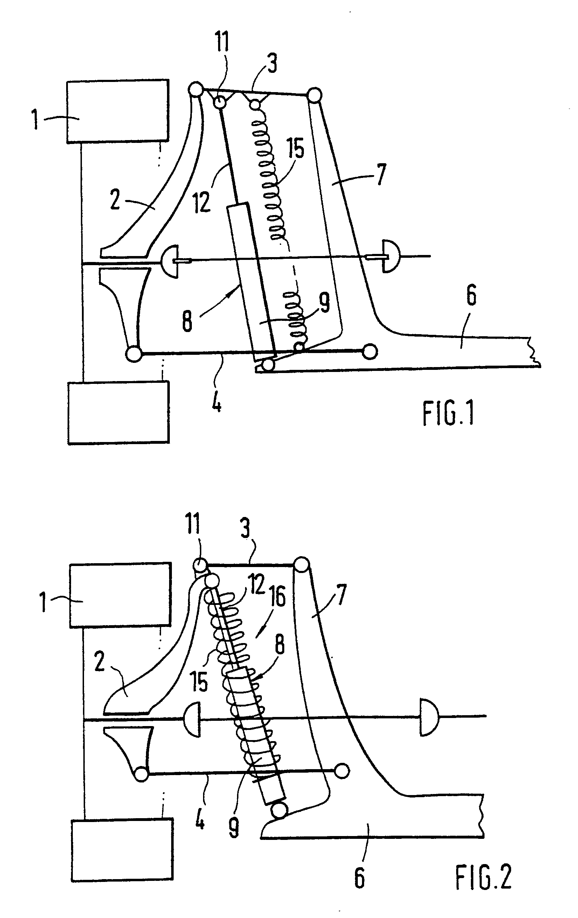

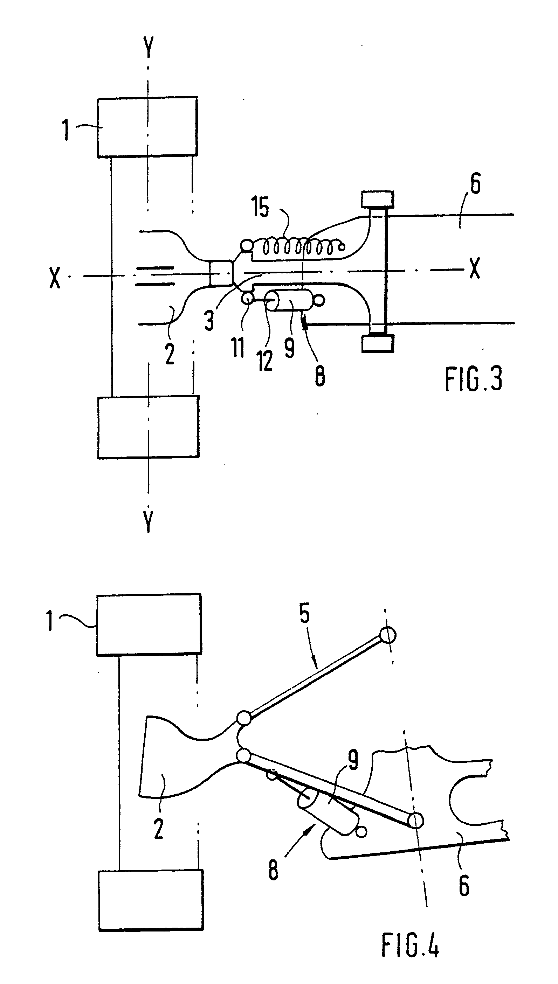

Eine Aufhängung für ein Rad 1 eines Kraftfahrzeugs umfaßt im wesentlichen am Radträger 2 angelenkte Radführungsglieder. Diese können aus einem oder mehreren oberen Querlenkern 3 und einem oder mehreren unteren Querlenkern 4 bestehen. Desweiteren können die Radführungsglieder auch aus Dreieckslenkern 5 bestehen, die in aufgelöster oder geschlossener Bauweise ausgeführt sein können. Die Lenker 3, 4; 5 sind jeweils über Lager entweder an einem Querträger 6 oder sonstigen Abstützorten am Fahrzeugaufbau schwenkbeweglich gehalten. Der Querträger 6 kann auch, wie in Fig.1 dargestellt , über einen Fortsatz 7 gleichzeitig den oberen Querlenker 3 sowie den unteren Querlenker 4 abstützen.

Das Dämpferelement 8 kann aus einem hydraulisch wirkenden Dämpferbein 9 oder auch aus einem Luftfederbein 10 bestehen.

Das Dämpferelement 8 ist so zwischen einem Radführungsteil 2 bzw. 3 bzw. 5 und einem aufbauseitigen Abstützort am Träger 6 oder dergleichen angeordnet, daß bei Einfederungsbewegungen E das Dämpferelement 8 auf Zug beansprucht wird.

Hierzu ist das Dämpferbein 9 mit seinem freien Ende 11 der Kolbenstange 12 am Radführungsteil 2; 3 oder 5 über ein Lager abgestützt. Der Zylinder 13 ist mit seinem freien Ende 14 an einem Träger 6 oder einem anderen aufbauseitigen Abstützort über ein weiteres Lager gehalten.

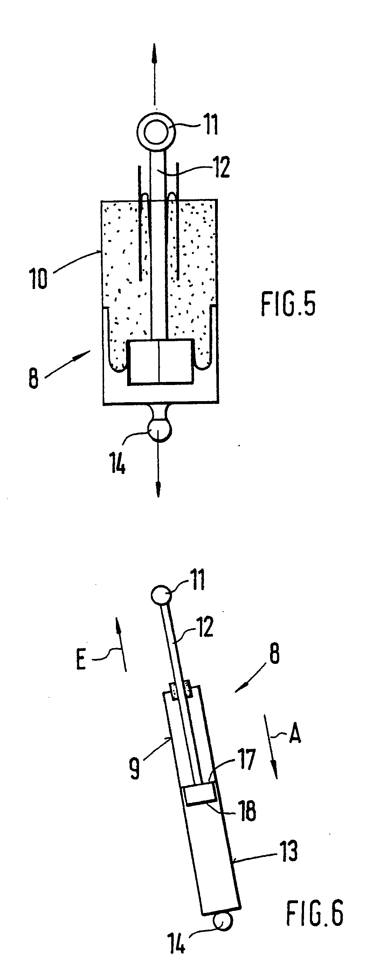

Die Abstützung des freien Endes 11 der Kolbenstange 12 kann am Radträger 2 (Fig. 2) oder an einem Lenkerarm 3 bzw. 5 erfolgen. Die dargestellten Radaufhängungen, wie die Doppelquerlenkerachse gemäß Fig.1 oder die Achse mit Dreieckslenkern gemäß Fig.4 sind nur Beispiele. Es ist jede mögliche Radaufhängung zur Abstützung des freien Endes 11 des Dämpferelements 8 denkbar.

Wie Fig.1 näher zeigt, kann das Dämpferbein 9 unmittelbar benachbart des Radträger 2 angeordnet werden, und eine Schraubenfeder 15 ist danebenliegend in einer gleichen Querebene vorgesehen und beide Element 9 und 15 stützen sich am Lenker 3 bzw. 5 ab.

In Fig.2 ist eine Ausführung einer aus Dämpferbein 9 und Schraubenfeder 15 kombinierter Baueinheit 16 dargestellt, die sich am Radträger 2 abstützt. Eine Abstützung dieser Einheit 16 am Lenker 3 bzw. 5 ist ebenfalls möglich.

Nach einer weiteren Ausführung gemäß Fig.3 ist das Dämpferbein 9 und die Schraubenfeder 15 zu beiden Seiten einer Radmittenquerebene X-X angeordnet, wobei die Lage der Feder und des Beines am Lenkerarm 3 sowie am Träger 6 jeweils in einer zur Radmittenlängsebene Y-Y parallelen Anordnung liegen. Der Träger 6 ist über Lager am Radträger und am Aufbau schwenkbar abgestützt.

In Fig.6 ist das Dämpferbein 9 in Einbaulage dargestellt. Bei einer Einfederungsbewegung des Rades 1 in Pfeilrichtung E wird die Ringfläche 17 des Kolbens und bei einer Ausfederungsbewegung in Pfeilrichtung A wird die größere Kolbenfläche 18 belastet, was entsprechend auch bei der Luftfeder 10 erfolgt.

## Patentansprüche

1. Radaufhängung für die Räder von Kraftfahrzeugen mit am Radträger angelenkten Radführungsgliedern, die am Fahrzeugaufbau schwenkbeweglich gelagert sind, wobei das Rad über Dämpferelemente und/oder Schraubenfedern zum Fahrzeugaufbau hin abgestützt ist, **dadurch gekennzeichnet,** daß zwischen einem Radführungsteil (2; 3; 5) und einem Träger (6) des Fahrzeugaufbaus ein bei Rad-Einfederungsbewegungen (E) auf Zug belastetes Dämpferelement (8) und/oder eine Schraubenfeder (15) angeordnet ist, und die bei den Einfederungsbewegungen (E) belastete eine Kolbenfläche (17) des Dämpferelements (8) kleiner ist als die bei Ausfederungsbewegungen (A) belastete weitere Kolbenfläche (18).

2. Radaufhängung nach Anspruch 1, **dadurch gekennzeichnet,** daß das Dämpferelement (8) mit einem freien Ende (11) seiner Kolbenstange (12) am Radträger (2) abgestützt ist, und ein freies Ende des Kolbenzylinders (14) am aufbauseitigen Träger (6) gelagert ist.

3. Radaufhängung nach Anspruch 1, **dadurch gekennzeichnet,** daß das Dämpferelement (8) und/oder die Schraubenfeder (15) an einem am Radträger (2) angelenkten oberen Lenker (3; 5) eines Radführungsgliedes abgestützt sind.

4. Radaufhängung nach Anspruch 1, **dadurch gekennzeichnet,** daß das Dämpferelement (8) innerhalb der Schraubenfeder (15) angeordnet ist, eine Baueinheit (16) bildet, die am Radträger (2) abgestützt ist.

5. Radaufhängung nach Anspruch 1, **dadurch gekennzeichnet,** daß das Dämpferelement (8) innerhalb der Schraubenfeder (15) angeordnet ist, eine Baueinheit (16) bildet, die am oberen Lenker (3; 5) des Radführungsgliedes abgestützt ist.

6. Radaufhängung nach einem oder mehreren der vorhergehenden Ansprüche, **dadurch gekennzeichnet,** daß das Dämpferelement (8) und die Schraubenfeder (15) zu beiden Seiten einer Radmittenquerebene (X-X) angeordnet sind und sich am oberen Lenker (3; 5) des Radführungsgliedes abstützen.

7. Radaufhängung nach Anspruch 1, **dadurch gekennzeichnet,** daß das Dämpferelement (8) unmittelbar benachbart des Radträgers (2) am oberen Lenker (3; 5) abgestützt ist und die Schraubenfeder (15) in einer gleichen vertikalen Querebene angeordnet und am gleichen Lenker (3; 5) gelagert ist.

8. Radaufhängung nach einem oder mehreren der vorhergehenden Ansprüche, **dadurch gekennzeichnet,** daß als Dämpferelement (8) zwischen Lenker (3; 5) bzw. Radträger (2) und aufbauseitigem Träger (6) eine bei den Einfederungsbewegungen (E) auf Zug belastete Luftfeder (10) verwendet wird.

9. Radaufhängung nach einem oder mehreren der vorhergehenden Ansprüche, **dadurch gekennzeichnet,** daß als Dämpferelement (8) zwischen Lenker (3; 5) bzw. Radträger (2) und aufbauseitigem Träger (6) ein bei den Rad-Einfederungsbewegungen (E) auf Zug belastetes hydraulisches Dämpferbein (9) verwendet wird.

10. Radaufhängung nach einem oder mehreren der vorhergehenden Ansprüche, **dadurch gekennzeichnet,** daß als oberer Lenker (5) ein Dreieckslenker in aufgelöster bzw. geschlossener Bauart verwendet wird.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-2 548 167 (CHRYSLER CORP.)<br>* Spalte 2, Zeilen 27 - 51; Figuren 1, 2 ** Spalte 1, Zeilen 1 - 11 *<br>– – – | 1,2,9,10,<br>3,7 | B 60 G 15/06<br>B 60 G 3/20<br>B 60 G 11/14 |
| X,A | GB-A-1 372 051 (THE ROVER CO.)<br>* Seite 2, Zeilen 1 - 55; Figur *<br>– – – | 1,4,9,10 | |
| Y | BE-A-5 305 13 (SOMVILLE C.)<br>* Figuren 1, 2, 3b *<br>– – – | 1,2,9 | |
| Y | GB-A-2 206 086 (JAGUAR CARS)<br>* Zusammenfassung; Figur 1 *<br>– – – | 1,2,9 | |
| A | FR-A-1 429 119 (DAIMLER-BENZ)<br>* Spalte 4, Zeile 14 - Spalte 5, Zeile 14; Figur *<br>– – – | 1-3,7-10 | |
| A | DE-A-2 120 460 (DAIMLER-BENZ)<br>* Seite 5, Zeile 23 - Seite 6, Zeile 4; Figur 1 *<br>– – – | 1 | |
| A | GB-A-2 137 146 (DAIMLER-BENZ)<br>* Zusammenfassung; Figur 1 *<br>– – – | 1 | RECHERCHIERTE SACHGEBIETE (Int. Cl.5) |
| A | US-A-2 351 291 (CHRYSLER CORP.)<br>* Figuren 1, 3 *<br>– – – | 1 | B 60 G |
| A | FR-A-2 221 294 (BRANDO G.)<br>* Figuren 1-4 *<br>– – – – – | | |

Der vorliegende Recherchenbericht wurde für alle Patentansprüche erstellt

| Recherchenort | Abschlußdatum der Recherche | Prüfer |
|---|---|---|
| Den Haag | 13 Juni 91 | TSITSILONIS L. |